# EUROPÄISCHE PATENTSCHRIFT

(11) **EP 3 456 033 B1**
(45) Veröffentlichungstag und Bekanntmachung des Hinweises auf die Patenterteilung: **22.05.2019**
(21) Anmeldenummer: 17742423.1
(22) Anmeldetag: 20.07.2017
(51) Int. Cl.: H04L 29/08

(54) **VERFAHREN ZUM ÜBERTRAGEN EINER DATEI ZWISCHEN EINER STEUERVORRICHTUNG EINES KRAFTFAHRZEUGS UND EINER FAHRZEUGEXTERNEN SERVERVORRICHTUNG, STEUERVORRICHTUNG, SERVERVORRICHTUNG UND KRAFTFAHRZEUG**
METHOD FOR TRANSFERRING A FILE BETWEEN A CONTROL DEVICE OF A MOTOR VEHICLE AND A SERVER DEVICE OUTSIDE THE VEHICLE, CONTROL DEVICE, SERVER DEVICE AND MOTOR VEHICLE
PROCÉDÉ DE TRANSMISSION D'UN FICHIER ENTRE UN DISPOSITIF DE COMMANDE D'UN VÉHICULE AUTOMOBILE ET UN DISPOSITIF SERVEUR EXTÉRIEUR AU VÉHICULE, DISPOSITIF DE COMMANDE, DISPOSITIF DE SERVEUR ET VÉHICULE AUTOMOBILE

(30) Priorität: 08.08.2016 DE 102016214671
(43) Veröffentlichungstag der Anmeldung: 20.03.2019
(73) Patentinhaber: AUDI AG, 85045 Ingolstadt (DE)
(72) Erfinder: NAFFATI, Malek, 85114 Buxheim (DE)
(86) Internationale Anmeldenummer: PCT/EP2017/068368
(87) Internationale Veröffentlichungsnummer: WO 2018/028967

(56) Entgegenhaltungen:
- DE-A1- 10 237 715
- DE-A1-102013 016 554
- DE-B3-102012 020 637
- US-A1- 2013 103 786

## Beschreibung

Die Erfindung betrifft ein Verfahren zum Übertragen einer Datei zwischen einer Steuervorrichtung eines Kraftfahrzeugs und einer fahrzeugexternen Servervorrichtung, die zum Beispiel ein Server des Internets sein kann. Zu der Erfindung gehören auch die Steuervorrichtung für das Kraftfahrzeug sowie ein Kraftfahrzeug, welches zum Durchführen des Verfahrens eingerichtet ist.

Die Übertragung von Daten eines Steuergeräts eines Kraftfahrzeugs an eine fahrzeugexterne Servervorrichtung ist möglich, falls das Steuergerät selbst ein Funkmodem aufweist oder die Daten indirekt über eine Kommunikationseinrichtung des Kraftfahrzeugs aussenden kann, die dann das Funkmodem bereitstellen muss. Um Kosten zu sparen, wird in der Regel nur ein Funkmodem in einer zentralen Kommunikationseinrichtung bereitgestellt, die über ein Datennetzwerk mit den Steuergeräten verbunden sein kann. Durch die begrenzte Übertragungsrate des Datennetzwerks des Kraftfahrzeugs ist entsprechend auch die Übertragungsbandbreite zum Übertragen von Daten an die Servervorrichtung limitiert. Zudem müssen die zu übertragenden Daten in der Kommunikationseinrichtung zwischengespeichert werden können. Hier ergibt sich insbesondere ein Problem, wenn ein Steuergerät zusammenhängende Daten aussenden soll, die vergleichsweise umfangreich sind. Dies kann bei zusammenhängenden Daten in Form einer Datei der Fall sein, die zum Beispiel eine Kamerabild eines Fahrerassistenzsystems oder ein einen Parametersatz eines Umfeldmodells oder künstlichen neuronalen Netzwerks des Fahrerassistenzsystems beschreibt. Dann muss die Datei zunächst an die Kommunikationseinrichtung übertragen werden, welche die Datei zwischenspeichern muss, um den Übertragungsvorgang zu der Servervorrichtung unabhängig von einer Auslastung des Datennetzwerks steuern zu können.

Die Kopplung von Steuergeräten mit einer fahrzeugexternen Servervorrichtung über eine Kommunikationseinrichtung ist zum Beispiel aus der DE 10 2013 016 554 A1 bekannt. Darin ist in der beschriebenen Weise vorgesehen, dass die Kommunikationseinrichtung Daten zunächst lokal in einem Speicher sammelt und anschließend die Übertragung zu der fahrzeugexternen Servervorrichtung vornimmt.

Eine Fahrzeug-Kommunikationsarchitektur mit mehreren Steuergeräten, die über ein Datennetzwerk mit einer Kommunikationseinrichtung gekoppelt sind, ist auch aus der DE 102 37 715 A1 bekannt. Darin ist beschrieben, dass auch von einer fahrzeugexternen Servervorrichtung aus aktiv auf Dateninhalte des Kraftfahrzeugs zugegriffen werden kann.

Das aktive Einsammeln oder Anfordern von Daten aus mehreren Steuergeräten durch eine elektronische Vorrichtung in einem Kraftfahrzeug ist aus der DE 10 2012 020 637 B3 bekannt.

In der US 2013/0103786 A1 wird ein Verfahren beschrieben, mittels welchem eine Datei, die zunächst in einzelne Dateisegmente zerlegt wird, von einem System A über ein Netzwerk zu einem System B übertragen wird. Hierbei wird zu jedem Dateisegment eine Segmentkennung übertragen, die in einer Elementeliste gespeichert wird. Diese Liste wird vor dem Übertragen der Dateisegmente an das System B übermittelt. Das System B kann daraufhin einzelne im System B fehlende Dateisegmente vom System A anfordern.

Der Erfindung die Aufgabe zugrunde, beim Übertragen von großen Dateien zwischen einer Steuervorrichtung eines Kraftfahrzeugs und einer fahrzeugexternen Servervorrichtung die Auslastung von Speicherressourcen und Übertragungskapazitäten der Kommunikationsverbindung gering zu halten.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung gemäß Anspruch 1 ist ein Verfahren zum Übertragen einer Datei zwischen einer Steuervorrichtung eines Kraftfahrzeugs und einer fahrzeugexternen Servervorrichtung bereitgestellt. Bei der Steuervorrichtung kann es sich um ein Steuergerät des Kraftfahrzeugs handeln. Die fahrzeugexterne Servervorrichtung kann zum Beispiel eine Servervorrichtung des Internets sein. Sie kann zum Beispiel als Computer oder als Computerverbund ausgestaltet sein. Die Datei kann zum Beispiel ein Kamerabild oder einen Datensatz für ein künstliches neuronales Netzwerk oder ein Umgebungsmodell enthalten. Die Datei kann insbesondere größer als 500 Kilobyte, insbesondere größer als ein Megabyte, insbesondere größer als 10 Megabyte, sein. Innerhalb des Kraftfahrzeugs ist die Steuervorrichtung über ein Datennetzwerk mit einer Kommunikationseinrichtung des Kraftfahrzeugs verbunden. Die Kommunikationseinrichtung kann ein weiteres Steuergerät des Kraftfahrzeugs sein. Das Datennetzwerk kann zum Beispiel ein Ethernet-Netzwerk oder ein CAN-Bus (CAN - Controller area network) des Kraftfahrzeugs sein. Die Kommunikationseinrichtung stellt eine Funkverbindung zu der Servervorrichtung bereit, wobei die Funkverbindung zum Übertragen der Datei genutzt wird. Die Kommunikationseinrichtung kann hierzu ein Funkmodem aufweisen, zum Beispiel ein Mobilfunk-Modul (z.B. LTE, UMTS oder GSM) und/oder ein WLAN-Funkmodul (WLAN - Wireless local area network). Zum Übertragen der Datei muss die Kommunikationseinrichtung Daten der Datei während der Übertragung zwischenspeichert.

Um hierbei den internen Speicher der Kommunikationseinrichtung in Bezug auf seine Speicherkapazität nicht so groß auslegen zu müssen, dass die gesamte Datei gespeichert werden kann, und/oder um das Datennetzwerk und die Funkverbindung nicht für einen längeren, zusammenhängenden Zeitraum zu blockieren, ist erfindungsgemäß Folgendes vorgesehen. Hierbei ist davon ausgegangen, dass es sich bei der Übertragung der Datei um eine Übertragung entweder von der Steuervorrichtung hin zur Servervorrichtung oder von der Servervorrichtung hin zur Steuervorrichtung handelt. Das Verfahren funktioniert also für eine Übertragung in beide möglichen Richtungen.

Die Datei wird in mehrere Dateisegmente eingeteilt. Dies wird von der sendenden Komponente, also der Steuervorrichtung oder der Servervorrichtung durchgeführt. Zu jedem Dateisegment wird eine jeweilige Segmentkennung ermittelt. Sie ist für jedes der Dateisegmente jeweils eindeutig. Vor dem Übertragen der Datei selbst werden die Segmentkennungen über die Funkverbindung übertragen. Somit erkennt oder kennt also die empfangende Komponente, also die Servervorrichtung oder die Steuervorrichtung, die Segmentkennungen. Die Dateisegmente werden dann jeweils unabhängig voneinander einzeln über die Funkverbindung durch einen jeweiligen Anforderungsbefehl angefordert. Die sendende Komponente empfängt also einen Anforderungsbefehl, welcher angibt, welches Dateisegment zu übertragen ist. Der Anforderungsbefehl umfasst dabei die Segmentkennung des angeforderten Dateisegments. Jedes angeforderte Dateisegment wird entsprechend unabhängig von den übrigen Dateisegmenten übertragen.

Die besagte Segmentgröße der Dateisegmente wird in Abhängigkeit von einer Puffergröße eines Datenpuffers, in welchen die Kommunikationseinrichtung die Daten der Datei zwischenspeichert, eingestellt. Somit wird also in Abhängigkeit von der verfügbaren Ressource "Puffergröße" die Segmentgröße festgelegt. Damit ist zuverlässig verhindert, dass es zu einer Überlastung des Datenpuffers kommt.

Durch das erfindungsgemäße Verfahren ergibt sich der Vorteil, dass zu keinem Zeitpunkt für die Kommunikationsverbindung zwischen Steuervorrichtung und Servervorrichtung die Notwendigkeit besteht, die gesamte Datei geschlossen oder in einem kontinuierlichen Übertragungsvorgang übertragen zu müssen. Die Übertragung bezieht sich jeweils nur auf eines der Dateisegmente, dessen Segmentgrößen entsprechend den verfügbaren Ressourcen angepasst sein kann.

Zu der Erfindung gehören auch vorteilhafte Weiterbildungen, durch deren Merkmale sich zusätzliche Vorteile ergeben.

Die Segmentkennung wird bevorzugt durch Ermitteln eines Prüfsummenwert oder eines Hashwerts erzeugt. Mit anderen Worten stellen die Segmentkennungen gleichzeitig eine Prüfsummenliste dar. Somit kann die Segmentkennung auch dazu genutzt werden zu überprüfen, ob ein Dateisegment fehlerfrei übertragen worden ist. Ein Beispiel für eine geeignete Prüfsumme ist die zyklische Redundanzprüfung (CRC - Cyclic redundancy check). Mittels eines Hashwerts kann ebenfalls ein Dateisegment eindeutig identifiziert werden. Allgemein ist somit vorgesehen, dass die Segmentkennung von den in dem Dateisegment enthaltenen Daten der Datei abhängig ist.

Zusätzlich oder alternativ dazu kann vorgesehen sein, dass jede Segmentkennung auch eine relative Lage des zugehörigen Dateisegment in der Datei angibt. Somit kann die Reihenfolge der Dateisegmente auf der Grundlage ihrer Segmentkennungen rekonstruiert werden. Zum Angeben der relativen Lage kann zum Beispiel eine Ordnungsnummer (erstes der Dateisegment, zweites Dateisegment,...) oder ein Offset, zum Beispiel ein Byte-Offset, als Versatz innerhalb der Datei angegeben werden. Alternativ dazu kann vorgesehen sein, dass die relative Lage der Dateisegmente zueinander implizit durch eine Reihenfolge, in welcher die Segmentkennungen der Dateisegmente über die Funkverbindung übertragen werden, festgelegt oder beschrieben wird. Somit ist kein zusätzlicher Speicherbedarf zum Angeben der relativen Lage nötig.

Der besagte Anforderungsbefehl kann in vorteilhafter Weise zum Steuern einer Auslastung des Datennetzwerks, der Kommunikationseinrichtung und/oder der Funkverbindung genutzt werden. Hierzu ist dann vorgesehen, dass der Anforderungsbefehl durch die Kommunikationseinrichtung blockiert oder verworfen (gelöscht) wird, falls eine Auslastung der Funkverbindung und/oder des Datennetzwerks und/oder der Kommunikationseinrichtung ein vorbestimmtes Überlastungskriterium erfüllt. Das Belastungskriterium kann zum Beispiel besagen, dass innerhalb eines vorbestimmten Zeitraums eine vorbestimmte Höchstmenge an Daten der Datei übertragen worden ist. Das Überlassungskriterium kann zusätzlich oder alternativ dazu angeben, dass eine vorbestimmte Anzahl an weiteren Anforderungsbefehlen oder an Übertragungsversuchen zum Übertragen anderer Daten in der Kommunikationseinrichtung vorliegt oder von dieser empfangen wurde.

Bevorzugt ist vorgesehen, dass die Segmentkennungen und später der Anforderungsbefehl jeweils zusammen mit einer Gerätekennung der Steuervorrichtung übertragen werden. Die Segmentkennungen und der Anforderungsbefehl sind somit der Steuervorrichtung durch Angeben der Gerätekennung zugeordnet. Die Kommunikationseinrichtung steuert entsprechend eine Weiterleitung eines über die Funkverbindung empfangenen Anforderungsbefehls (Steuervorrichtung sendet Datei an Servervorrichtung) in das Datennetzwerk in Abhängigkeit von der in dem Anforderungsbefehl enthaltenen Gerätekennung. Hierdurch ist es in vorteilhafter Weise ermöglicht, dass die Servervorrichtung Dateisegmente von unterschiedlichen Steuervorrichtungen nacheinander oder abwechselnd anfordern kann. Mit jedem Anforderungsbefehl ist die Steuervorrichtung, die als nächstes einen Dateisegment senden soll, identifiziert.

Um in der empfangenden Komponente die Datei aus den Dateisegmenten rekonstruieren zu können, kann vorgesehen sein, dass zusätzlich von der sendenden Komponente ein Dateiname und eine Dateigröße übermittelt werden, in der empfangenden Komponente dann eine leere Zieldatei erzeugt wird, welche die Dateigröße aufweist, und jedes empfangene Dateisegmente entsprechend seiner relativen Lage oder Position in der zu übertragenden Datei lagerichtig in die Zieldatei hineingeschrieben oder abgespeichert wird. Falls das Internetprotokoll (IP) verwendet wird, ist in der Regel eine direkte Verbindung zwischen der Steuervorrichtung und der Servervorrichtung im Sinne einer Peer-to-peer-Verbindung nötig. Die Kommunikationseinrichtung fungiert dann als Router oder Gateway. Dies ist aber bei dem erfindungsgemäßen Verfahren bevorzugt vermieden. Stattdessen ist bevorzugt vorgesehen, dass die Peer-to-peer-Verbindung die Kommunikationseinrichtung und die Servervorrichtung über die Funkverbindung verbindet, also die Peer-to-peer-Verbindung durch die Kommunikationseinrichtung und die Servervorrichtung bereitgestellt ist, so dass die Peer-to-peer-Verbindung an der Kommunikationseinrichtung im Kraftfahrzeug einerseits und der Servervorrichtung andererseits endet. Um die Daten der Datei zwischen der Steuervorrichtung und der Kommunikationseinrichtung fahrzeugintern zu übertragen, ist dann vorgesehen, dass die Kommunikationseinrichtung in dem Datennetzwerk die Übertragung der Datei als einen von der Peer-to-peer-Verbindung verschiedenen Netzwerkdienst für die Steuervorrichtung bereitstellt. Die Steuervorrichtung kann somit zum Beispiel auf der Grundlage einer Interprozesskommunikation (IPC - Inter process communication) die Dateisegmente mit der Kommunikationseinrichtung austauschen (Senden oder Empfangen). Somit bleibt das Datennetzwerk von einer fahrzeugexternen Kommunikationsverbindung, wie sie durch die Peer-to-peer-Verbindung bereitgestellt ist, abgeschottet oder isoliert. Somit ist das Datennetzwerk von zum Beispiel dem Internet und/oder einem Mobilfunknetzwerk getrennt.

Zu der Erfindung gehört auch, gemäß Anspruch 8, die besagte Steuervorrichtung für das Kraftfahrzeug. Die Steuervorrichtung ist dazu eingerichtet, zum Aussenden einer Datei über eine Kommunikationseinrichtung des Kraftfahrzeugs an eine fahrzeugexterne Servervorrichtung zunächst die Datei in mehrere Dateisegmente einzuteilen, zu jedem Dateisegment eine jeweilige Segmentkennung zu ermitteln, vor dem Aussenden der Datei die Segmentkennungen über die Kommunikationseinrichtung an die Servervorrichtung auszusenden, zu jedem der Dateisegmente unabhängig von den übrigen Dateisegmenten über die Kommunikationseinrichtung einen jeweiligen Anforderungsbefehl aus der Servervorrichtung zu empfangen, der die Segmentkennung des jeweils angeforderten Dateisegments umfasst, und jedes angeforderte Dateisegment unabhängig von übrigen Dateisegmenten auszusenden, wobei die Steuervorrichtung dazu eingerichtet ist, eine Segmentgröße der Dateisegmente in Abhängigkeit von einer Puffergröße eines Datenpuffers, in welchem die Kommunikationseinrichtung des Kraftfahrzeugs die Daten der Datei zwischenspeichert, einzustellen. Die Steuervorrichtung kann somit als sendende Komponente in dem beschriebenen Verfahren betrieben werden.

Die Steuervorrichtung kann in Weiterbildungen Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Steuervorrichtung hier nicht noch einmal beschrieben.

Zu der Erfindung gehört weiterhin, gemäß Anspruch 9, die besagte Servervorrichtung, die ebenfalls als sendende Komponente in dem beschriebenen Verfahren betrieben werden kann.

Zu der Erfindung gehört auch das Kraftfahrzeug, welches zumindest eine Steuervorrichtung aufweist, die eine Ausführungsform der erfindungsgemäßen Steuervorrichtung darstellt. Die zumindest eine Steuervorrichtung ist über ein Datennetzwerk des Kraftfahrzeugs mit einer Kommunikationseinrichtung des Kraftfahrzeugs verbunden. Die Kommunikationseinrichtung ist dazu eingerichtet, über eine Funkverbindung zu einer fahrzeugexternen Servervorrichtung bereitzustellen. Insgesamt ist das Kraftfahrzeug dazu eingerichtet, eine Ausführungsform des erfindungsgemäßen Verfahrens durchzuführen.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: ein Diagramm zur Veranschaulichung einer Ausführungsform des erfindungsgemäßen Verfahrens, das mittels des Kraftfahrzeugs von Fig. 1 durchgeführt werden kann; und
- Fig. 3: ein Diagramm zur Veranschaulichung einer konkreten Implementierung des Verfahrens gemäß Fig. 2.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

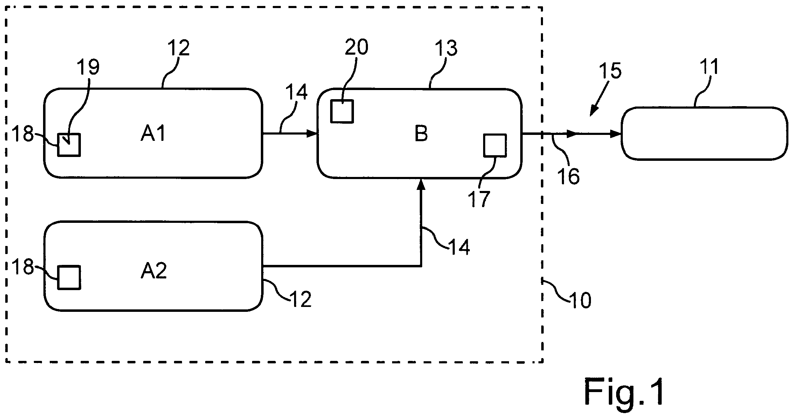

In Fig. 1 sind ein Kraftfahrzeug 10 und eine Servervorrichtung 11 dargestellt. Das Kraftfahrzeug 10 kann zum Beispiel ein Kraftwagen, insbesondere ein Personenkraftwagen, sein. Die Servervorrichtung 11 kann zum Beispiel durch einen Server des Internets bereitgestellt sein. Die Servervorrichtung 11 kann hierzu einen Computer oder einen Computerverbund umfassen.

In dem Kraftfahrzeug 10 können eine Steuervorrichtung oder mehrere Steuervorrichtungen 12 und eine Kommunikationseinrichtung 13 aufweisen. Eine Steuervorrichtung 12 kann zum Beispiel zum Bereitstellen einer Fahrerassistenzfunktionalität ausgestaltet sein. Eine Steuervorrichtung 12 kann zum Beispiel eine Kamera oder einen anderen Sensor umfassen. Jede Steuervorrichtung 12 kann mit der Kommunikationseinrichtung 13 über ein Datennetzwerk 14 verbunden sein. Das Datennetzwerk 14 kann auf der Grundlage eines Ethernet und/oder CAN und/oder MOST-Bus (Media oriented aystems transport) und/oder FlexRay-Bus basieren. Die Kommunikationseinrichtung 13 kann mit der Servervorrichtung 11 über eine weitere Kommunikationsverbindung 15 verbunden sein, die eine Funkverbindung 16 zum Beispiel zu einem Mobilfunknetzwerks (nicht dargestellt) oder zu einem WLAN-Router umfassen kann. Die Kommunikationsverbindung 15 kann eine Peer-to-peer-Verbindung sein, z.B. eine TCP/IP-Verbindung (TCP - transmission control protocol) oder eine UDP/IP-Verbindung (UDP - user datagram protocol). Für das Bereitstellen der Funkverbindung 16 kann die Kommunikationseinrichtung 13 ein Funkmodem 17 umfassen, beispielsweise ein Mobilfunkmodul und/oder ein Funkmodem für WLAN. Die Kommunikationseinrichtung 13 kann zum Beispiel als ein Gateway des Datennetzwerks 14 oder als ein weiteres Steuergerät für das Kraftfahrzeug 10 ausgestaltet sein.

Die Steuervorrichtungen 12 können an die Servervorrichtung 11 Daten übertragen, die jeweils in einer Datei 18 zusammengefasst sein können, die einen Datensatz der Daten darstellt, die zusammengehören. Z.B. kann es sich bei einer Datei 18 um eine Bilddatei oder eine Audiodatei oder einen Datensatz für ein Modell oder ein künstliches neuronales Netzwerk handeln.

Zum Übertragen der Datei 18 einer Steuervorrichtung 12 hin zur Servervorrichtung 11 nutzt jede Steuervorrichtung 12 die Funkverbindung 16, die durch Kommunikationseinrichtung 13 bereitgestellt ist. Mit anderen Worten müssen die in jeder Datei 18 enthaltenen Daten 19 in einem Datenpuffer 20 der Kommunikationseinrichtung 13 zwischengespeichert werden können, um sie dann über die Kommunikationsverbindung 15 zur Servervorrichtung 11 hin übertragen zu können. Hierbei muss aber der Datenpuffer 20 nicht so groß sein wie die Datei 18, sondern der Datenpuffer 20 kann kleiner als die Datei 18 sein.

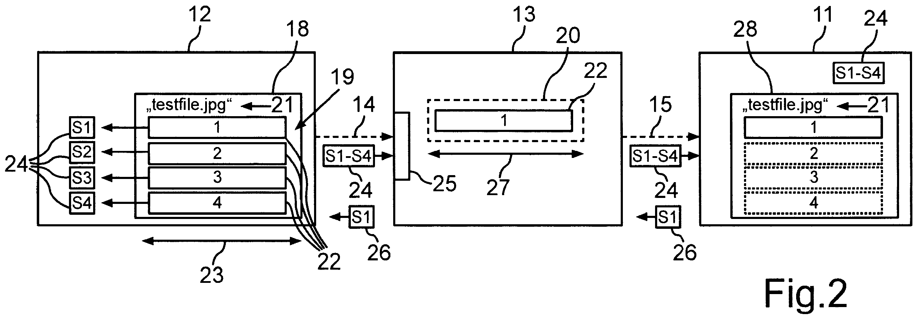

Fig. 2 veranschaulicht hierzu das Übertragungsprinzip. In der Steuervorrichtung 12 ist die Datei 18 mit einem Dateinamen 21 (hier beispielhaft "testfile.jpg") und den Daten 19 gespeichert. Die Daten 19 können in Dateisegmente 22 eingeteilt werden, von denen jedes eine vorbestimmte Segmentgröße 23 aufweisen kann. Die Einteilung kann rein logisch oder durch Aufteilen der Daten 19 in einem Speicher erfolgen. Die Dateisegmente sind hier durch die Bezeichnungen S1 bis S4 namentlich unterschieden. Zu jedem Dateisegment 22 kann jeweils eine Segmentkennung 24 berechnet werden, zum Beispiel ein Hashwert. Die Steuervorrichtung 12 kann über eine Inter-Prozess-Kommunikation an einer Dienst-Schnittstelle 25, zum Beispiel einer IP-Socket (IP-Internetprotokoll) die Übertragung der Datei 18 an der Kommunikationseinrichtung 13 anfordern. Die Dienst-Schittstelle 25 stellt einen Zugang zu einem Netzwerkdienst der Kommunikationseinrichtung 13 im Datennetzwerk 14 dar. Die Kommunikationseinrichtung 13 kann dann für die anfordernde Steuervorrichtung 12 die Datenübertragung zur Servervorrichtung 11 vermitteln.

Die Steuervorrichtung 12 kann die Segmentkennungen 24 über die Kommunikationseinrichtung 13 an die Servervorrichtung 11 übermitteln, sodass die Segmentkennungen 24 in der Servervorrichtung 11 vorliegen. Diese Servervorrichtung 11 kann dann einzeln jeweils eines der Dateisegmente 22 anfordern, indem von dem auszusendenden oder zu übertragenden Dateisegment 22 jeweilige Segmentkennung als Anforderungsbefehl 26 über die Kommunikationseinrichtung 13 an die Servervorrichtung 12 übertragen wird. Die Steuervorrichtung 12 kann somit das angeforderte Dateisegment 22 (in Fig. 2 das Dateisegment S1) unabhängig von den übrigen Dateisegmenten 22 an die Kommunikationseinrichtung 13 übertragen. Die Kommunikationseinrichtung 13 muss somit in ihrem Datenpuffer 20 lediglich Daten der Segmentgröße 23 speichern, sodass eine Puffergröße 27 der Segmentgröße 23 entspricht. Nun kann das zwischengespeicherte Dateisegment 22 aus dem Datenpuffer 20 über die Kommunikationsverbindung 15 an die Servervorrichtung 11 übertragen werden. Die Servervorrichtung 11 kann zum Speichern der Dateisegmente 22 eine Leerdatei 28 erzeugen, die z.B. den gleichen Dateinamen 21 wie die Datei 18 aufweisen kann. Die empfangenen Dateisegmente 22 können dann in der korrekten Reihenfolge, wie sie zum Beispiel durch die Segmentkennungen 24 beschrieben sein kann, in der Leerdatei 28 abgespeichert werden, wie dies in Fig. 2 für das erste Dateisegment S1 veranschaulicht ist.

Sodann kann mittels eines weiteren Anforderungsbefehls 26 das nächste Dateisegment 22 durch Angabe der entsprechenden Segmentkennung 24 angefordert werden, das dann in demselben Datenpuffer 20 zwischengespeichert werden kann, da die Daten des bereits erfolgreich übertragenden Dateisegments 22 nicht mehr in dem Datenpuffer 20 benötigt werden.

Die segmentierte Datenübertragung erlaubt es, Daten über ein Steuergerät mit Modem 17 (d.h. insgesamt die Kommunikationseinrichtung 13) an eine Servervorrichtung 11 auszuleiten, ohne Ressourcen zur vollständigen Zwischenspeicherung der Daten 19 zur Verfügung stellen zu müssen. Diese Ressourcen müssen nur auf dem Steuergerät 12 verfügbar sein, von dem die Daten 19 gesendet werden sollen. Das ausleitende Steuergerät 13 mit Modem 17 muss lediglich die Übertragung zwischen Steuervorrichtungen 12 und Servervorrichtung 11 koordinieren und einen geringen Zwischenspeicher (Datenpuffer 20, Cache) zur Verfügung stellen. Hierbei wird auch die Arbitrierung der Internetverbindung übernommen.

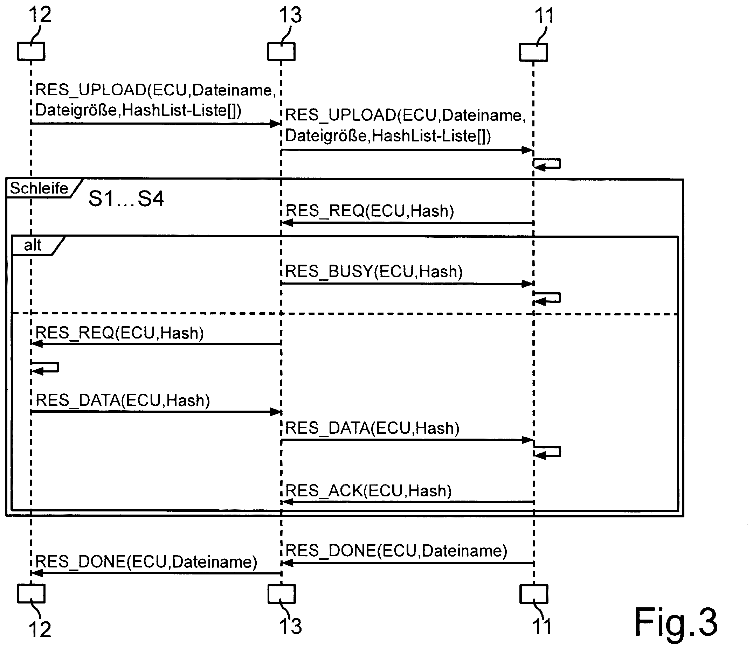

Fig. 3 veranschaulicht eine konkrete Implementierung dieses Übertragungsprinzips.

Aufgabe der Kommunikationseinrichtung 13 ist hierbei die Koordinierung der durch die Steuergeräte 12 initiierten Datenüberragungen an die Servervorrichtung 11. Die Umsetzung dieser Komponente berücksichtigt zum einen die eingeschränkten Speicher-Ressourcen der Kommunikationseinrichtung 13 und die Arbitrierung der Datenübertragung der Steuergeräte 12 an die Kommunikationseinrichtung 13, und von der Kommunikationseinrichtung 13 an die Servervorrichtung 11.

Die Kommunikationseinrichtung 13 stellt einen konfigurierbaren Datensammler ODC dar, der die genannte Funktionen bereitstellt. Die Servervorrichtung 11 stellt ein Backend (hinteres Ende) dar.

Eine große zu versendende Datei 18 auf einem Steuergerät 12 wird zunächst in Dateisegmenten 22 betrachtet. Für jedes Segment 22 wird ein Hashwert als Segmentkennung 24 gebildet und dieser in einer Liste HashList gespeichert. Die Steuervorrichtung 12 sendet die Nachricht RES_UPLOAD an den Datensammler (Kommunikationseinrichtung 12), der diese wiederrum die Servervorrichtung 11 weiterleitet. Die gesendete RES_UPLOAD-Nachricht teilt dem Backend mit, dass die Steuervorrichtung 12 eine Datei 18 mit dem Dateinamen 21 (Filename) und mit der Dateigröße Filelength übertragen möchte. Weiterhin wird in der Nachricht eine Liste HashList der Hashes für jedes Dateisegment 22 gesendet. Zudem kann eine Gerätekennung ECU die Steuervorrichtung 12 identifizieren.

Die vom Backend 11 empfangene Nachricht RES_UPLOAD führt dazu, dass die Datei 28 angelegt wird. Das Backend 11 wird nun für jedes Hash in der HashList eine RES_REQ-Nachricht an die Kommunikationseinrichtung 13 senden (loop S1...S4). Diese Enthält die Gerätekennung ECU mit dem die Kommunikationseinrichtung 13 die Nachricht an die richtige Steuervorrichtung weiterleiten kann. Die RES_REQ-Nachricht ist die Anforderung des Backenddienstes an eine Steuervorrichtung 12 ein bestimmtes, durch einen Hash identifiziertes Dateisegment 22 zu senden.

Die Steuervorrichtung 12 sendet bei Empfang der RES_REQ-Nachricht eine RES_DATA-Nachricht, die neben Gerätekennung ECU und Segmentkennung Hash, zwecks Identifikation, das eigentliche Dateisegment 22 beinhaltet. Die Nachricht wird in der Kommunikationseinrichtung 13 zwischengespeichert und an das Backend 11 weitergeleitet. Dieses nutzt die HashList um die angeforderten Dateisegmente 22 auch in der korrekten Reihenfolge zu rekonstruieren und zu speichern.

Sollte eine RES_REQ Nachricht vom Backend an die Kommunikationseinrichtung gesendet werden, während noch eine Datenübertragung stattfindet (alt), wird diese Anfrage mit RES_BUSY beantwortet. Der Backenddienst muss dieses Dateisegment zu einem späteren Zeitpunkt erneut anzufordern.

Sobald alle Dateisegmente vom Fahrzeug angefordert und empfangen wurden, wird der Upload der Datei durch die Nachricht RES_DONE abgeschlossen. Die Kommunikationseinrichtung löscht seinen Zwischenspeicher (Cache), die Steuervorrichtung 12 löscht die Datei 18, sofern sie nicht länger benötigt wird.

Die Segmentgröße 23 der übertragenen Dateisegmente 22 wird durch die Steuervorrichtung 12 bestimmt. Die Segmentierung der Daten in unterschiedlichen Segmentgrößen führt zu einer variierenden Anzahl an Dateisegmenten und Hashes in der HashList. Lediglich die benötigten Ressourcen zur Zwischenspeicherung auf dem ODC sind als Einschränkung zu berücksichtigen.

Insgesamt zeigt das Beispiel, wie durch die Erfindung Steuergeräte einen Datei-Upload mittels konfigurierbarem Datensammler durchführen können.

## Patentansprüche

1. Verfahren zum Übertragen einer Datei (18) zwischen einer Steuervorrichtung (12) eines Kraftfahrzeugs (10) und einer fahrzeugexternen Servervorrichtung (11), wobei die Steuervorrichtung (12) in dem Kraftfahrzeug (10) über ein Datennetzwerk (14) mit einer Kommunikationseinrichtung (13) verbunden ist, welche eine für die Übertragung der Datei (18) genutzte Funkverbindung (16) zu der Servervorrichtung (11) bereitstellt und welche Daten (19) der Datei (18) während der Übertragung zwischenspeichert, wobei
- die Datei (18) in mehrere Dateisegmente (22) eingeteilt wird,
- zu jedem Dateisegment (22) eine jeweilige Segmentkennung (24) ermittelt wird,
- vor dem Übertragen der Datei (18) die Segmentkennungen (24) über die Funkverbindung (17) übertragen werden,
- die Dateisegmente (22) unabhängig voneinander über die Funkverbindung (16) durch einen jeweiligen Anforderungsbefehl (26) einzeln angefordert werden, wobei der Anforderungsbefehl (26) die Segmentkennung (24) des angeforderten Dateisegments (22) umfasst,
- jedes angeforderte Dateisegment (22) unabhängig von den übrigen Dateisegmenten (22) übertragen wird, und
- eine Segmentgröße (23) der Dateisegmente (22) in Abhängigkeit von einer Puffergröße (27) eines Datenpuffers (20), in welchem die Kommunikationseinrichtung (13) die Daten (19) der Datei (18) zwischenspeichert, eingestellt wird.

2. Verfahren nach Anspruch 1, wobei die Segmentkennung (24) durch Ermitteln eines Prüfsummenwerts oder eines Hashwerts erzeugt wird.

3. Verfahren nach einem der vorhergehenden Ansprüche, wobei jede Segmentkennung (24) auch eine relative Lage des zugehörigen Dateisegments (22) in der Datei (18) angibt oder
wobei die relative Lage anhand einer Reihenfolge, in welcher die Segmentkennungen (24) über die Funkverbindung (17) übertragen werden, ermittelt wird.

4. Verfahren nach einem der vorhergehenden Ansprüche, wobei der Anforderungsbefehl (26) durch die Kommunikationseinrichtung (13) blockiert oder verworfen wird, falls eine Auslastung der Funkverbindung (16) und/oder des Datennetzwerks (14) und/oder der Kommunikationseinrichtung (13) ein vorbestimmtes Überlastungskriterium erfüllt, welches insbesondere besagt, dass innerhalb eines vorbestimmten Zeitraums eine vorbestimmte Höchstmenge an Daten der Datei übertragen worden ist oder dass eine vorbestimmte Anzahl an weiteren Anforderungsbefehlen oder an Übertragungsversuchen zum Übertragen anderer Daten in der Kommunikationseinrichtung vorliegt oder von dieser empfangen wurde.

5. Verfahren nach einem der vorhergehenden Ansprüche, wobei die Segmentkennungen (24) und der Anforderungsbefehl (26) jeweils zusammen mit einer Gerätekennung (ECU) der Steuervorrichtung (12) übertragen werden und die Kommunikationseinrichtung (13) eine Weiterleitung eines über die Funkverbindung (16) empfangenen Anforderungsbefehls (26) in das Datennetzwerk (14) in Abhängigkeit von der in dem Anforderungsbefehl (26) enthaltenen Gerätekennung (ECU) steuert.

6. Verfahren nach einem der vorhergehenden Ansprüche, wobei ein Dateiname (21) und Dateigröße übermittelt werden, eine leere Zieldatei (28), welche die Dateigröße aufweist, erzeugt wird und jedes empfangene Dateisegmente (22) entsprechend seiner relativen Lage in der zu übertragenden Datei (18) lagerichtig hineingeschrieben wird.

7. Verfahren nach einem der vorhergehenden Ansprüche, wobei die Kommunikationseinrichtung (13) und die Servervorrichtung (11) über die Funkverbindung (16) eine Peer-to-Peer-Verbindung (15) bereitstellen und die Kommunikationseinrichtung (13) in dem Datennetzwerk (14) die Übertragung der Datei (18) als einen von der Peer-to-Peer-Verbindung (15) verschiedenen Netzwerkdienst (25) für die Steuervorrichtung bereitstellt.

8. Steuervorrichtung (12) für ein Kraftfahrzeug (10), wobei die Steuervorrichtung (12) dazu eingerichtet ist, zum Aussenden einer Datei (18) über eine Kommunikationseinrichtung (13) des Kraftfahrzeugs (10) an eine fahrzeugexterne Servervorrichtung (11) zunächst die Datei (18) in mehrere Dateisegmente (22) einzuteilen, zu jedem Dateisegment (22) eine jeweilige Segmentkennung (24) zu ermitteln, vor dem Aussenden der Datei (18) die Segmentkennungen (24) über die Kommunikationseinrichtung (13) an die Servervorrichtung (11) auszusenden, zu jedem der Dateisegmente (22) unabhängig von den übrigen Dateisegmenten (22) über die Kommunikationseinrichtung (13) einen jeweiligen Anforderungsbefehl (26) zu empfangen, wobei der Anforderungsbefehl (26) die Segmentkennung (24) des jeweils angeforderten Dateisegments (22) umfasst, und jedes angeforderte Dateisegment (22) unabhängig von den übrigen Dateisegmenten (22) auszusenden, wobei die Steuervorrichtung (12) dazu eingerichtet ist, eine Segmentgröße (23) der Dateisegmente (22) in Abhängigkeit von einer Puffergröße (27) eines Datenpuffers (20), in welchem die Kommunikationseinrichtung (13) die Daten (19) der Datei (18) zwischenspeichert, einzustellen.

9. Servervorrichtung (11), wobei diese dazu eingerichtet ist, zum Aussenden einer Datei (18) an eine Kommunikationseinrichtung (13) eines Kraftfahrzeugs (10) zunächst die Datei (18) in mehrere Dateisegmente (22) einzuteilen, zu jedem Dateisegment (22) eine jeweilige Segmentkennung (24) zu ermitteln, vor dem Aussenden der Datei (18) die Segmentkennungen (24) über die Kommunikationseinrichtung (13) an eine Steuervorrichtung (12) des Kraftfahrzeugs (10) auszusenden, zu jedem der Dateisegmente (22) unabhängig von den übrigen Dateisegmenten (22) von der Kommunikationseinrichtung (13) einen jeweiligen Anforderungsbefehl (26) zu empfangen, wobei der Anforderungsbefehl (26) die Segmentkennung (24) des jeweils angeforderten Dateisegments (22) umfasst, und jedes angeforderte Dateisegment (22) unabhängig von den übrigen Dateisegmenten (22) auszusenden, wobei die Servervorrichtung (10) dazu eingerichtet ist, eine Segmentgröße (23) der Dateisegmente (22) in Abhängigkeit von einer Puffergröße (27) eines Datenpuffers (20), in welchem die Kommunikationseinrichtung (13) des Kraftfahrzeugs (10) die Daten (19) der Datei (18) zwischenspeichert, einzustellen.

10. Kraftfahrzeug (10) mit zumindest einer Steuervorrichtung (12) nach Anspruch 8, wobei die zumindest eine Steuervorrichtung (12) über ein Datennetzwerk (14) des Kraftfahrzeugs (10) mit einer Kommunikationseinrichtung (13) des Kraftfahrzeugs (10) verbunden sind, wobei die Kommunikationseinrichtung (13) dazu eingerichtet ist, eine Funkverbindung (16) zu einer fahrzeugexternen Servervorrichtung (11) nach Anspruch 9 bereitzustellen, wobei das Kraftfahrzeug (10) dazu eingerichtet ist, ein Verfahren nach einem der Ansprüche 1 bis 7 durchzuführen.

## Claims

1. Method for transferring a file (18) between a control device (12) of a motor vehicle (10) and a server device (11) outside the vehicle, wherein the control device (12) in the motor vehicle (10) is connected via a data network (14) with a communication device (13) which provides a wireless connection (16), used for the transfer of the file (18), to the server device (11) and which buffers data (19) of the file (18) during the transfer, wherein
- the file (18) is divided into several file segments (22),
- a respective segment recognition (24) is determined for each file segment (22),
- prior to the transfer of the file (18) the segment recognitions (24) are transferred via the wireless connection (17),
- the file segments (22) are requested individually independently of one another via the wireless connection (16) by means of a respective request command (26), wherein the request command (26) comprises the segment recognition (24) of the requested file segment (22),
- each requested file segment (22) is transferred independently of the remaining file segments (22), and
- a segment size (23) of the file segments (22) is set depending on a buffer size (27) of a data buffer (20), in which the communication device (13) buffers the data (19) of the file (18).

2. Method according to claim 1, wherein the segment recognition (24) is generated by determining a checksum value or a hash value.

3. Method according to any of the preceding claims, wherein each segment recognition (24) specifies also a relative position of the associated file segment (22) in the file (18) or
wherein the relative position is determined on the basis of a sequence in which the segment recognitions (24) are transferred via the wireless connection (17).

4. Method according to any of the preceding claims, wherein the request command (26) is blocked or rejected by the communication device (13) in the case that a load of the wireless connection (16) and/or of the data network (14) and/or of the communication device (13) fulfils a predetermined overload criterion which in particular states that within a predetermined time a predetermined maximum quantity of data of the file has been transferred or that a predetermined number of further request commands or of transfer attempts to transfer other data exists in the communication device or has been received by said communication device.

5. Method according to any of the preceding claims, wherein the segment recognitions (24) and the request command (26) are in each case transferred together with a device recognition (ECU) of the control device (12) and the communication device (13) controls a forwarding of a request command (26) received via the wireless connection (16) into the data network (14) dependent on the device recognition (ECU) contained in the request command (26).

6. Method according to any of the preceding claims, wherein a file name (21) and file size are transmitted, an empty target file (28), which has the file size, is generated and each received file segments (22) is written in the correct position corresponding to its relative position in the file (18) to be transferred.

7. Method according to any of the preceding claims, wherein the communication device (13) and the server device (11) provide via the wireless connection (16) a peer-to-peer-connection (15) and the communication device (13) in the data network (14) provides the transfer of the file (18) as a network service (25), different from the peer-to-peer-connection (15), for the control device.

8. Control device (12) for a motor vehicle (10), wherein the control device (12) is configured, in order to broadcast a file (18) via a communication device (13) of the motor vehicle (10) to a server device (11) outside the vehicle, first to divide the file (18) into several file segments (22), to determine a respective segment recognition (24) for each file segment (22), prior to the broadcast of the file (18) to broadcast to the server device (11) the segment recognitions (24) via the communication device (13), to receive via the communication device (13) a respective request command (26) for each of the file segments (22) independently of the remaining file segments (22), wherein the request command (26) comprises the segment recognition (24) of the respectively requested file segment (22), and to broadcast each requested file segment (22) independently of the remaining file segments (22), wherein the control device (12) is configured to set a segment size (23) of the file segments (22) depending on a buffer size (27) of a data buffer (20) in which the communication device (13) buffers the data (19) of the file (18).

9. Server device (11), wherein said server device is configured, for broadcasting a file (18) to a communication device (13) of a motor vehicle (10), first to divide the file (18) into several file segments (22), to determine a respective segment recognition (24) for each file segment (22), prior to the broadcasting of the file (18) to broadcast the segment recognitions (24) via the communication device (13) to a control device (12) of the motor vehicle (10), to receive from the communication device (13) a respective request command (26) for each of the file segments (22) independent of the remaining file segments (22), wherein the request command (26) comprises the segment recognition (24) of the respectively requested file segment (22), and to broadcast each requested file segment (22) independently of the remaining file segments (22), wherein the server device (10) is configured to set a segment size (23) of the file segments (22) depending on a buffer size (27) of a data buffer (20), in which the communication device (13) of the motor vehicle (10) buffers the data (19) of the file (18).

10. Motor vehicle (10) having at least one control device (12) according to claim 8, wherein the at least one control device (12) is connected via a data network (14) of the motor vehicle (10) with a communication device (13) of the motor vehicle (10), wherein the communication device (13) is configured to provide a wireless connection (16) to a server device (11) outside the vehicle according to claim 9, wherein the motor vehicle (10) is configured to carry out a method according to any of claims 1 to 7.

## Revendications

1. Procédé de transmission d'un fichier (18) entre un dispositif de commande (12) d'un véhicule automobile (10) et un dispositif serveur (11) extérieur au véhicule, dans lequel le dispositif de commande (12) dans le véhicule automobile (10) est connecté via un réseau de données (14) à un dispositif de communication (13) qui affecte une liaison radio (16) utilisée pour la transmission du fichier (18) au dispositif serveur (11) et qui mémorise des données (19) du fichier (18) au cours de la transmission, dans lequel
- le fichier (18) est divisé en plusieurs segments de fichier (22),
- un indicatif de segment (24) respectif est déterminé pour chaque segment de fichier (22),
- avant la transmission du fichier (18), les indicatifs de segments (24) sont transmis via la liaison radio (17),
- les segments de fichier (22) sont appelés individuellement indépendamment l'un de l'autre via la liaison radio (16) par un ordre d'appel (26) respectif, dans lequel l'ordre d'appel (26) comprend l'indicatif de segment (24) du segment de fichier (22) appelé,
- chaque segment de fichier (22) appelé est transmis indépendamment des autres segments de fichier (22) et
- une grandeur de segment (23) des segments de fichier (22) est réglée en fonction d'une grandeur tampon (27) d'un tampon de données (20) dans lequel le dispositif de communication (13) mémorise les données (19) du fichier (18).

2. Procédé selon la revendication 1, dans lequel l'indicatif de segment (24) est produit par détermination d'une valeur somme de contrôle ou d'une valeur de hachage.

3. Procédé selon l'une quelconque des revendications précédentes, dans lequel chaque indicatif de segment (24) indique également une position relative du segment de fichier (22) associé dans le fichier (18) ou
dans lequel la position relative est déterminée sur la base d'une séquence dans laquelle les indicatifs de segments (24) sont transmis via la liaison radio (17).

4. Procédé selon l'une quelconque des revendications précédentes, dans lequel l'ordre d'appel (26) est bloqué ou rejeté par le dispositif de communication (13) au cas où un volume de travail de la liaison radio (16) et/ou du réseau de données (14) et/ou du dispositif de communication (13) remplit un critère de surcharge prédéterminé qui signifie en particulier que, dans un intervalle de temps prédéterminé, une quantité maximale prédéterminée de données du fichier a été transmise ou qu'un nombre prédéterminé d'autres ordres d'appel ou de tentatives de transmission pour transmettre d'autres données est présent(e) dans le dispositif de communication ou a été reçu(e) par celui-ci.

5. Procédé selon l'une quelconque des revendications précédentes, dans lequel les indicatifs de segments (24) et l'ordre d'appel (26) respectivement sont transmis conjointement avec un indicatif d'appareil (ECU) du dispositif de commande (12) et le dispositif de communication (13) commande une transmission d'un ordre d'appel (26) reçu via la liaison radio (16) dans le réseau de données (14) en fonction de l'indicatif d'appareil (ECU) contenu dans l'ordre d'appel (26).

6. Procédé selon l'une quelconque des revendications précédentes, dans lequel un nom de fichier (21) et une grandeur de fichier sont transmis, un fichier cible (28) vide, qui présente la grandeur du fichier, est produit et chaque segment de fichier (22) reçu est inscrit à sa place respective de manière correspondant à sa position relative dans le fichier (18) à transmettre.

7. Procédé selon l'une quelconque des revendications précédentes, dans lequel le dispositif de communication (13) et le dispositif serveur (11) affectent une liaison poste à poste (15) via la liaison radio (16) et le dispositif de communication (13) affecte dans le réseau de données (14) la transmission du fichier (18) ainsi qu'un service de réseau (25) différent de la liaison poste à poste (15) pour le dispositif de commande.

8. Dispositif de commande (12) pour un véhicule automobile (10), dans lequel le dispositif de commande (12) est agencé pour, lors de l'envoi d'un fichier (18) via un dispositif de communication (13) du véhicule automobile (10) à un dispositif serveur (11) extérieur au véhicule, diviser tout d'abord le fichier (18) en plusieurs segments de fichier (22), déterminer pour chaque segment de fichier (22) un indicatif de segment (24) respectif, envoyer, avant l'envoi du fichier (18), les indicatifs de segments (24) via le dispositif de communication (13) au dispositif serveur (11), recevoir pour chacun des segments de fichier (22), indépendamment des autres segments de fichier (22), via le dispositif de communication (13) un ordre d'appel (26) respectif, dans lequel l'ordre d'appel (26) comprend l'indicatif de segment (24) du segment de fichier (22) respectivement appelé, et envoyer chaque segment de fichier (22) appelé indépendamment des autres segments de fichier (22), dans lequel le dispositif de commande (12) est agencé pour régler une grandeur de segment (23) des segments de fichier (22) en fonction d'une grandeur tampon (27) d'un tampon de fichier (20), dans lequel le dispositif de communication (13) mémorise les données (19) du fichier (18).

9. Dispositif serveur (11), dans lequel celui-ci est agencé de manière à, lors de l'envoi d'un fichier (18) à un dispositif de communication (13) d'un véhicule automobile (10), diviser tout d'abord le fichier (18) en plusieurs segments de fichier (22), déterminer pour chaque segment de fichier (22) un indicatif de segment (24) respectif, envoyer, avant l'envoi du fichier (18), les indicatifs de segments (24) via le dispositif de communication (13) à un dispositif serveur (12) du véhicule automobile (10), recevoir pour chacun des segments de fichier (22), indépendamment des autres segments de fichier (22) du dispositif de communication (13) un ordre d'appel (26) respectif, dans lequel l'ordre d'appel (26) comprend l'indicatif de segment (24) du segment de fichier (22) respectivement appelé, et envoyer chaque segment de fichier (22) appelé indépendamment des autres segments de fichier (22), dans lequel le dispositif de commande (10) est agencé pour régler une grandeur de segment (23) des segments de fichier (22) en fonction d'une grandeur tampon (27) d'un tampon de fichier (20), dans lequel le dispositif de communication (13) du véhicule automobile (10) mémorise les données (19) du fichier (18).

10. Véhicule automobile (10) ayant au moins un dispositif de commande (12) selon la revendication 8, dans lequel le au moins un dispositif de commande (12) est connecté via un réseau de données (14) du véhicule automobile (10) à un dispositif de communication (13) du véhicule automobile (10), dans lequel le dispositif de communication (13) est agencé pour affecter une liaison radio (16) à un dispositif serveur (11) extérieur au véhicule selon la revendication 9, dans lequel le véhicule automobile (10) est agencé pour réaliser un procédé selon l'une quelconque des revendications 1 à 7.
